# EUROPÄISCHE PATENTANMELDUNG

(11) **EP 3 745 643 A1**
(43) Veröffentlichungstag der Anmeldung: **02.12.2020**
(21) Anmeldenummer: 19177288.8
(22) Anmeldetag: 29.05.2019
(51) Int. Cl.: H04L 12/24, H04L 29/12

(54) **VERFAHREN ZUR ADRESSVERGABE AN KOMMUNIKATIONSGERÄTE UND STEUERUNGSGERÄT FÜR EIN INDUSTRIELLES AUTOMATISIERUNGSSYSTEM**

(71) Anmelder: Siemens Aktiengesellschaft, 80333 München (DE)
(72) Erfinder: Höme, Stephan, 91126 Schwabach (DE); Rziha, Martin, 90513 Zirndorf (DE)

(57) **Zusammenfassung**

Zur Adressvergabe an Kommunikationsgeräte (202-204), die mit einem Steuerungsgerät (201) eines industriellen Automatisierungssystems verbunden sind, übermittelt das Steuerungsgerät stellvertretend für die Kommunikationsgeräte (202-204) zur Adressvergabe jeweils eine Konfigurationsanforderung (213) entsprechend einem Konfigurationsprotokoll an einen Konfigurationsserver (103). Im Gegensatz zu den Kommunikationsgeräten umfasst das Steuerungsgerät hierfür einen Konfigurationsclient (212) für das Konfigurationsprotokoll. Der Konfigurationsserver stellt auf die Konfigurationsanforderungen jeweils eine Adresskonfiguration (131) für das jeweilige Kommunikationsgerät bereit und übermittelt diese entsprechend dem Konfigurationsprotokoll an das Steuerungsgerät. Das Steuerungsgerät setzt die Adresskonfigurationen jeweils in eine Geräteprojektierung um und übermittelt die Geräteprojektierung mittels eines Steuerungsbefehls (214) an das jeweilige Kommunikationsgerät.

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Aus EP 2 940 926 B1 ist bekannt, dass eine Konfigurationseinheit eines Kommunikationsgeräts zur Konfiguration des Kommunikationsgeräts ein Datagramm mit einer Konfigurationsanforderung an einen Konfigurationsserver übermittelt. Der Konfigurationsserver weist dem Kommunikationsgerät auf die Konfigurationsanforderung zumindest einen ersten topologischen Gerätenamensbestandteil zu, der einer räumlichen oder hierarchischen Anordnung des Konfigurationsservers zugeordnet ist. Durch jede weiterleitende Verteilereinheit wird ein weiterer topologischer Gerätenamensbestandteil ergänzt, der einer räumlichen oder hierarchischen Anordnung der jeweiligen weiterleitenden Verteilereinheit zugeordnet ist. Die Konfigurationseinheit des Kommunikationsgeräts erzeugt aus den topologischen Gerätenamensbestandteilen und einem innerhalb seines Teilnetzes eindeutigen Namensbestandteil dessen Gerätenamen.

In EP 2 975 827 A1 ist beschrieben, dass zur Konfiguration von Kommunikationsgeräten erste Konfigurationsinformationen für die Kommunikationsgeräte mittels Routerbekanntgabe-Nachrichten durch zumindest einen Router innerhalb eines Teilnetzes an vom jeweiligen Teilnetz umfasste Kommunikationsgeräte übermittelt werden. Die ersten Konfigurationsinformationen umfassen Steuerungsinformationen mit Angaben über zweite Konfigurationsinformationen, die durch zumindest einen Konfigurationsserver bereitgestellt werden. Mittels Kommunikationsgeräte- oder Router-seitiger Diagnoseeinheiten wird überprüft, ob die ersten Konfigurationsinformationen innerhalb des jeweiligen Teilnetzes zueinander konsistente Steuerungsinformationen umfassen. Bei einem Vorliegen inkonsistenter Steuerungsinformationen werden die Kommunikationsgeräte entsprechend ersten Konfigurationsinformationen konfiguriert, die durch zumindest einen vor Vorliegen der inkonsistenten Steuerungsinformationen für eine Konfiguration maßgeblichen Router übermittelt werden.

EP 3 059 930 A1 offenbart ein Verfahren zur Konfiguration eines Kommunikationsgeräts eines industriellen Automatisierungssystems, bei dem aus zumindest einem mittels Routerbekanntgabe-Nachrichten übermittelten Präfix und aus einem geräteindividuellen Schnittstellenidentifikator selbständig eine dem Kommunikationsgerät zugeordnete Kommunikationsnetzadresse erzeugt wird. Die Routerbekanntgabe-Nachrichten werden durch zumindest einen innerhalb eines Teilnetzes zugeordneten Router übermittelt. Das Kommunikationsgerät fragt bei zumindest einem Server eines Namensdienst-Systems entsprechend einem Namensauflösungsprotokoll ab, welche Kommunikationsnetzadressen seinem Kommunikationsgerätnamen zugeordnet sind. Die beim Server des Namensdienst-Systems abgefragten Kommunikationsnetzadressen werden auf eine Übereinstimmung mit dem Präfix überprüft. Das Kommunikationsgerät ordnet sich nur die beim Server des Namensdienst-Systems abgefragten Kommunikationsnetzadressen zu, die eine Übereinstimmung mit dem durch den Router übermittelten Präfix aufweisen.

Entsprechend EP 3 242 466 B1 speichert eine Konfigurationsdatenverteilereinheit bei Empfang einer Adresskonfigurationsanforderung eines ersten Kommunikationsgeräts industriellen Automatisierungssystems eine Zuordnung mit vorgebbarer Gültigkeitsdauer zwischen dem ersten Kommunikationsgerät und einem Adresskonfigurationsserver und leitet anhand der gespeicherten Zuordnung während der Gültigkeitsdauer sämtliche Konfigurationsanforderungen des ersten Kommunikationsgeräts an den Adresskonfigurationsserver weiter. Dagegen speichert die Konfigurationsdatenverteilereinheit bei Empfang einer Präfixdelegationsanforderung eines zweiten Kommunikationsgeräts mit Routerfunktion eine Zuordnung mit vorgebbarer Gültigkeitsdauer zwischen dem zweiten Kommunikationsgerät und eine Präfixkonfigurationsserver und leitet anhand der gespeicherten Zuordnung während der Gültigkeitsdauer sämtliche Konfigurationsanforderungen des zweiten Kommunikationsgeräts an den Präfixkonfigurationsserver weiter.

Kommunikationsadressen können in Kommunikationsgeräten entweder statisch konfiguriert oder beispielsweise mittels eines DHCP-Servers (Dynamic Host Configuration Protocol) auf eine Konfigurationsanforderung automatisch oder dynamisch an Kommunikationsgeräte zugeteilt werden. Während eine statische Konfiguration von Kommunikationsadressen grundsätzlich eine erhöhte Stabilität bietet, da beispielsweise keine Abhängigkeiten von einem DHCP-Server bestehen, ermöglicht eine Adresszuteilung mittels DHCP eine flexiblere Ausnutzung eines bestehenden Adressvorrats. Insbesondere eine Migration von Kommunikationsgeräten in andere Subnetze lässt mittels DHCP leicht realisieren und erfordert keine Neuplanung einer Adresszuordnung. Allerdings gehen mit einer Verwendung von DHCP-Clients in Kommunikations- oder Automatisierungsgeräten Hardware-Anforderungen einher, die in bestehenden Geräten oder in Geräten mit geringem Leistungsvermögen nicht ohne weiteres umsetzbar sind.

Der vorliegenden Erfindung liegt die Aufgabe zugrunde, ein aufwandsarm realisierbares Verfahren zur automatischen bzw. dynamischen Adressvergabe an mit einem Steuerungsgerät eines industriellen Automatisierungssystems verbundene Kommunikationsgeräte zu schaffen, das für die Kommunikationsgeräte keine DHCP-Clients erfordert, sowie ein Steuerungsgerät zur Durchführung des Verfahrens anzugeben.

Diese Aufgabe wird erfindungsgemäß durch ein Verfahren mit den in Patentanspruch 1 angegebenen Merkmalen und durch eine Steuerungsgerät mit den in Patentanspruch 10 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Adressvergabe an Kommunikationsgeräte, die mit einem Steuerungsgerät eines industriellen Automatisierungssystems verbunden sind, übermittelt das Steuerungsgerät stellvertretend für die Kommunikationsgeräte zur Adressvergabe jeweils eine Konfigurationsanforderung entsprechend einem Konfigurationsprotokoll, vorzugsweise DHCP, an einen Konfigurationsserver. Dabei umfasst das Steuerungsgerät einen Konfigurationsclient für das Konfigurationsprotokoll, während die Kommunikationsgeräte keine Konfigurationsclients, insbesondere keine DHCP-Clients, für das Kommunikationsprotokoll umfassen. Das Steuerungsgerät ist beispielsweise eine speicherprogrammierbare Steuerung (SPS) oder ein IO-Controller (Input/Output) für IO- bzw. Eingabe/Ausgabe-Geräte oder Feldgeräte. Der Konfigurationsserver stellt auf die Konfigurationsanforderungen jeweils eine Adresskonfiguration für das jeweilige Kommunikationsgerät bereit und übermittelt diese entsprechend dem Konfigurationsprotokoll an das Steuerungsgerät.

Das Steuerungsgerät setzt die Adresskonfigurationen erfindungsgemäß jeweils in eine Geräteprojektierung um und übermittelt die Geräteprojektierung mittels eines Steuerungsbefehls an das jeweilige Kommunikationsgerät. Die Kommunikationsgeräte richten ihre jeweilige Kommunikationsadresse, insbesondere IP-Adresse, jeweils entsprechend der vom Steuerungsgerät übermittelten Geräteprojektierung ein. Die Geräteprojektierung wird beispielsweise von einem Engineering-System übernommen und umfasst vorzugsweise neben der durch den Konfigurationsserver vergebenen Kommunikationsadresse einen durch das Steuerungsgerät verwalteten Gerätenamen für das jeweilige Kommunikationsgerät.

Das erfindungsgemäße Verfahren ermöglicht Nutzung von automatischer bzw. dynamischer Adressvergabe, insbesondere mittels DHCP, ohne dass sämtliche Kommunikationsgeräte mit einem Konfigurationsclient ausgerüstet sein müssen. Insbesondere werden mit der automatischen bzw. dynamischen Adressvergabe hohe Aufwände für eine Hardwarekonfiguration komplexer Maschinen mit mehreren Kommunikations- bzw. Automatisierungsgeräten vermieden. Gerade für eine automatische, eindeutige Adressierung von Serienmaschinen ist dies ein großer Vorteil. Beispielsweise können Serienmaschinen bei einfacher Duplizierung ein übereinstimmendes Adressband nutzen und somit nur per NAT (Network Address Translation) an ein bestehendes Kommunikationsnetz eines industriellen Automatisierungssystems angeschlossen werden. Darüber hinaus kann jeder Maschine durch Nutzung von DHCP ein eigenes Subnetz zugeordnet werden, ohne dass hierfür eine Konfigurationsanpassung erforderlich ist.

Entsprechend einer vorteilhaften Ausgestaltung der vorliegenden Erfindung nutzt das Steuerungsgerät bei einem Ausfall des Konfigurationsservers einen reservierten Adressbereich mit lokal gültigen Kommunikationsnetzadressen und weist den Kommunikationsgeräten jeweils eine lokal gültige Kommunikationsnetzadresse aus dem reservierten Adressbereich zu. Dabei werden die lokal gültigen Kommunikationsnetzadressen jeweils mit der jeweiligen Geräteprojektierung an die Kommunikationsgeräte übermittelt. Auf diese Weise kann ein Ausfall des Konfigurationsservers zumindest hinsichtlich einer Aufrechterhaltung lokaler Konnektivität kompensiert werden.

Vorzugsweise übermittelt das Steuerungsgerät die Konfigurationsanforderungen an den Konfigurationsserver jeweils bei einem Betriebsstart eines Kommunikationsgeräts. Damit kann ein industrielles Automatisierungssystem flexibel erweitert bzw. geändert und gleichzeitig eine zulässige Adresskonfiguration der Kommunikationsgeräte gewährleistet werden. Entsprechend einer weiteren zusätzlichen oder alternativen Ausgestaltung der vorliegenden Erfindung übermittelt das Steuerungsgerät eine vorgegebene Anzahl Konfigurationsanforderungen an den Konfigurationsserver für eine spätere Geräteprojektierung von Kommunikationsgeräten. In Konfigurationsanforderungen üblicherweise anzugebende MAC-Adressen können beispielsweise aus Projektierungsdaten entnommen werden. Mit einem Vorrat an bereits vorliegenden Adresskonfigurationen kann eine Einrichtung der Kommunikationsadressen in den Kommunikationsgeräten beschleunigt werden.

Entsprechend einer besonders bevorzugten Ausgestaltung der vorliegenden Erfindung entsprechen die Steuerungsbefehle zur Übermittlung der jeweiligen Geräteprojektierung an die Kommunikationsgeräte einem feldbusspezifischen Gerätekonfigurationsprotokoll. Ein Beispiel für ein solches feldbusspezifisches Gerätekonfigurationsprotokoll ist PROFINET DCP entsprechend Standard IEC 61158. Der Steuerungsbefehl zur Übermittlung der Geräteprojektierung kann damit beispielsweise durch DCP Set implementiert werden.

Vorteilhafterweise ermittelt das Steuerungsgerät mit ihm verbundene Kommunikationsgeräte mittels einer Geräteerkennungsanfrage entsprechend dem feldbusspezifischen Gerätekonfigurationsprotokoll, beispielsweise mittels DCP Identify. Somit kann das Steuerungsgerät bedarfsgerecht Konfigurationsanforderungen an den Konfigurationsserver übermitteln. Darüber hinaus kann das Steuerungsgerät eine Erreichbarkeit von projektierten Kommunikationsgeräten mittels einer gezielten Geräteerkennungsanfrage entsprechend dem feldbusspezifischen Gerätekonfigurationsprotokoll überprüfen. Auf diese Weise kann sichergestellt werden, dass die projektierten Kommunikationsgeräte auch tatsächlich mit dem Steuerungsgerät verbunden sind, um beispielsweise unnötige Konfigurationsanforderungen zu vermeiden. Insbesondere kann das Steuerungsgerät die jeweilige Geräteprojektierung hierzu vor Umsetzung der vom Konfigurationsserver übermittelten Adresskonfiguration einer gerätespezifischen Gerätekonfigurationsdatei entnehmen und die Erreichbarkeit von projektierten Kommunikationsgeräten ermitteln, für die jeweils eine geräteindividuelle Gerätekonfigurationsdatei vorliegt.

Darüber hinaus speichert das Steuerungsgerät vorteilhafterweise anhand der vom Konfigurationsserver übermittelten Adresskonfigurationen und anhand projektierter Gerätenamen Gerätename-Kommunikationsadress-Zuordnungen. Auf dieser Grundlage kann das Steuerungsgerät einen Namensdienst für Adressauflösungsanfragen hinsichtlich der mit ihm verbundenen Kommunikationsgeräte bereitstellen.

Das erfindungsgemäße Steuerungsgerät für ein industrielles Automatisierungssystem ist zur Durchführung eines Verfahrens entsprechend vorangehenden Ausführungen vorgesehen und dafür ausgestaltet sowie eingerichtet mit zugeordneten Kommunikationsgeräten verbunden zu werden. Außerdem ist das Steuerungsgerät dafür ausgestaltet und eingerichtet, stellvertretend für die Kommunikationsgeräte zur Adressvergabe jeweils eine Konfigurationsanforderung entsprechend einem Konfigurationsprotokoll an einen Konfigurationsserver zu übermitteln. Darüber hinaus ist das Steuerungsgerät dafür ausgestaltet und eingerichtet, vom Konfigurationsserver auf die Konfigurationsanforderungen entsprechend dem Konfigurationsprotokoll übermittelte Adresskonfiguration jeweils in eine Geräteprojektierung umzusetzen und die Geräteprojektierung mittels eines Steuerungsbefehls an das jeweilige Kommunikationsgerät zu dessen Einrichtung zu übermitteln.

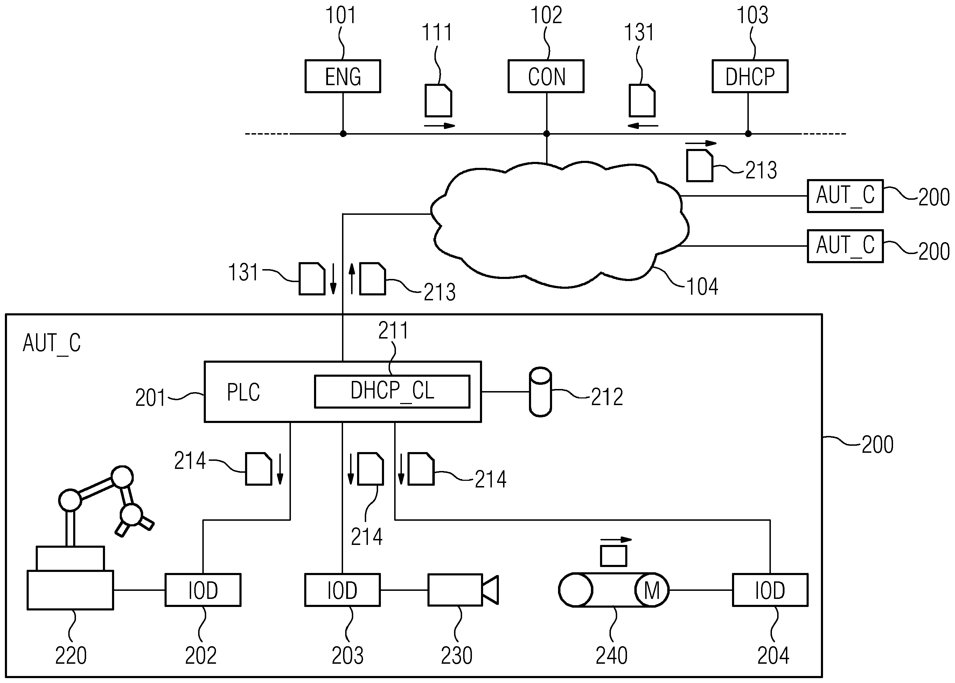

Die vorliegende Erfindung wird an einem Ausführungsbeispiel anhand der Zeichnung näher erläutert. Es zeigt
- Figur 1: ein industrielles Automatisierungssystem mit mehreren Zellen, die jeweils eine speicherprogrammierbare Steuerung mit DHCP-Client und mehrere IO-Geräte ohne DHCP-Client umfassen.

Das in Figur 1 dargestellte industrielle Automatisierungssystem umfasst mehrere Zellen 200 mit jeweils mehreren Automatisierungsgeräten 201-204. Im vorliegenden Ausführungsbeispiel sind die Zellen 200 über ein IP-basiertes Kommunikationsnetz 104 mit einem Engineering-System 101 zur Projektierung von Automatisierungsgeräten, mit einem Leitsystem 102 zur Überwachung von Automatisierungsgeräten und mit einem DHCP-Server (Dynamic Host Configuration System) 103 verbunden.

Der DHCP-Server 103 stellt entsprechend IETF RFC 2131 (Version 4) bzw. IETF RFC 3315 (Version 6) auf Anforderungen von DHCP-Clients jeweils eine Netzwerkkonfiguration an den jeweiligen DHCP-Clients bereit. Entsprechend DHCP, Version 4 umfasst die Netzwerkkonfiguration insbesondere eine IP-Adresse und eine Subnetz-Maske. Darüber hinaus können die durch den DHCP-Server 103 bereitgestellten Netzwerkkonfigurationen grundsätzlich auch Angaben über DNS-Server oder Default-Gateways umfassen. DHCP, Version 6 wird aufgrund unter IPv6 verfügbarer Adressautokonfigurationsfunktionen primär für eine Zuweisung eines IPv6-Netzwerk-Präfix und eines DNS-Servers genutzt. Das vorliegende Ausführungsbeispiel bezieht sich exemplarisch auf DHCP, Version 4.

DHCP ermöglicht neben einer manuellen Zuordnung einer statischen IP-Adresse auch eine automatische Zuordnung sowie eine dynamische Zuordnung. Bei der automatischen Zuordnung wird für den DHCP-Server ein freigegebener Adressbereich festgelegt. Aus diesem Adressbereich werden IP-Adressen automatisch an anfragende DHCP-Clients zugewiesen, wobei eine Zuordnung zwischen MAC-Adressen dieser Clients und den zugewiesenen IP-Adressen mittels einer Tabelle protokolliert wird. Die automatische Zuordnung ist permanent, so dass den Kommunikationsgeräten jeweils immer dieselbe IP-Adresse zuwiesen und damit an kein anderes Kommunikationsgerät vergeben wird. Im Gegensatz dazu ist die dynamische Zuordnung lediglich temporär und auf eine vorgegebene, durch erneute Beantragung verlängerbare Lease Time beschränkt. Mit der dynamischen Zuordnung lässt sich ein zur Verfügung stehender Adressbereich grundsätzlich effizienter nutzen.

Automatisierungsgeräte können beispielsweise Bedien- und Beobachtungsstationen, speicherprogrammierbare Steuerungen, Eingabe/Ausgabe-Geräte (IO-Geräte), IO-Controller, RFID-Lesegeräte oder Systeme für maschinelle Bildverarbeitung sein. Im vorliegenden Ausführungsbeispiel umfasst eine Zelle jeweils eine speicherprogrammierbare Steuerung 201 und mehrere IO-Geräte 202-204. Die IO-Geräte 202-204 dienen einem Austausch von Steuerungs- und Messgrößen zwischen der speicherprogrammierbaren Steuerung 201 und durch die speicherprogrammierbare Steuerung 201 gesteuerten Maschinen oder Vorrichtungen 220, 230, 240. Im Gegensatz zu den IO-Geräten 202-204 umfasst die speicherprogrammierbare Steuerung 201 einen DHCP-Client 211.

Speicherprogrammierbare Steuerungen umfassen üblicherweise jeweils ein Kommunikationsmodul, eine Zentraleinheit sowie zumindest eine Eingabe/Ausgabe-Einheit. Die Zentraleinheit ist insbesondere für eine Ermittlung geeigneter Steuerungsgrößen aus erfassten Messgrößen vorgesehen. Über Kommunikationsmodule können speicherprogrammierbare Steuerungen beispielsweise mit einem Router, mit einem Switch bzw. mit einem Feldbus verbunden werden. Obige Komponenten speicherprogrammierbarer Steuerungen werden vorzugsweise über ein Rückwandbus-System miteinander verbunden.

Zur Vergabe von IP-Adressen an die IO-Geräte 202-204 übermittelt die speicherprogrammierbare Steuerung 201 mittels ihres DHCP-Clients 211 stellvertretend für die IO-Geräte 202-204 jeweils eine DHCPDISCOVER-Nachricht als Konfigurationsanforderung 213 an den DHCP-Server 103. Dabei umfassen die Konfigurationsanforderungen 213 jeweils die MAC-Adressen der IO-Geräte 202-204. Der DHCP-Server 103 stellt auf die Konfigurationsanforderungen 213 jeweils eine Adresskonfiguration 131 für das jeweilige IO-Gerät 202-204 bereit und übermittelt diese mittels einer DHCPOFFER-Nachricht an die speicherprogrammierbare Steuerung 201. Die Adresskonfiguration 131 wird anschließend durch die speicherprogrammierbare Steuerung 201 mittels einer an den DHCP-Server 103 übermittelten DHCPREQUEST-Nachricht verbindlich ausgewählt. Diese Auswahl wird wiederum durch den DHCP-Server 103 mittels einer an die speicherprogrammierbare Steuerung 201 übermittelten DHCPACKnachricht bestätigt.

Die speicherprogrammierbare Steuerung 201 setzt die Adresskonfigurationen 131 jeweils in eine Geräteprojektierung um und übermittelt die Geräteprojektierung mittels eines Steuerungsbefehls 214 an das jeweilige IO-Gerät 202-204. Die IO-Geräte 202-204 richten abschließend ihre jeweilige IP-Adresse jeweils entsprechend der von der speicherprogrammierbaren Steuerung 201 übermittelten Geräteprojektierung ein. Die Steuerungsbefehle 214 zur Übermittlung der jeweiligen Geräteprojektierung an die IO-Geräte 202-204 entsprechen einem feldbusspezifischen Gerätekonfigurationsprotokoll. Im vorliegenden Ausführungsbeispiel ist das feldbusspezifische Gerätekonfigurationsprotokoll PROFINET DCP entsprechend Standard IEC 61158. Das vorliegende Ausführungsbeispiel lässt sich jedoch in analoger Weise für vergleichbare feldbusspezifische Gerätekonfigurationsprotokolle übertragen.

Der Steuerungsbefehl 214 zur Übermittlung der jeweiligen Geräteprojektierung an die IO-Geräte 202-204 wird vorzugsweise als DCP Set-Befehl implementiert. Zur Vorbereitung einer Übermittlung der Konfigurationsanforderungen 213 an den DHCP-Server 103 ermittelt die speicherprogrammierbare Steuerung 201 die mit ihr verbundenen IO-Geräte mittels einer Geräteerkennungsanfrage entsprechend dem feldbusspezifischen Gerätekonfigurationsprotokoll. Im vorliegenden Ausführungsbeispiel wird diese Geräteerkennungsanfrage als DCP Identify-Befehl implementiert. Entsprechend einer bevorzugten Ausgestaltung überprüft die speicherprogrammierbare Steuerung 201 eine Erreichbarkeit von IO-Geräten, für die vom Engineering-System 101 jeweils eine Geräteprojektierung 111 an die speicherprogrammierbare Steuerung 201 bereitgestellt worden ist, mittels einer gezielten Geräteerkennungsanfrage entsprechend dem feldbusspezifischen Gerätekonfigurationsprotokoll. Darüber hinaus speichert die speicherprogrammierbare Steuerung 201 anhand der vom DHCP-Server 103 übermittelten Adresskonfigurationen 131 und anhand projektierter Gerätenamen Gerätename-Kommunikationsadress-Zuordnungen in einer Datenbank 212 und stellt einen Namensdienst für Adressauflösungsanfragen hinsichtlich mit ihm verbundener Automatisierungs- bzw. Kommunikationsgeräte bereit.

Vorteilhafterweise nutzt die speicherprogrammierbare Steuerung 201 bei einem Ausfall des DHCP-Servers 103 einen reservierten Adressbereich mit lokal gültigen IP-Adressen und weist den IO-Geräten 202-204 jeweils eine lokal gültige IP-Adresse aus dem reservierten Adressbereich zu. Auch in diesem Fall werden die lokal gültigen IP-Adressen jeweils mit der jeweiligen Geräteprojektierung an die IO-Geräte 202-204 übermittelt. Vorzugsweise übermittelt die speicherprogrammierbare Steuerung 201 die Konfigurationsanforderungen 213 jeweils bei einem Betriebsstart eines IO-Geräts 202-204 an den DHCP-Server 103. Alternativ oder zusätzlich hierzu kann vorgesehen sein, dass die speicherprogrammierbare Steuerung 201 eine vorgegebene Anzahl Konfigurationsanforderungen 213 an den DHCP-Server 103 für eine spätere Geräteprojektierung von Kommunikationsgeräten übermittelt.

Die Anwendung der vorliegenden Erfindung ist nicht auf das hier beschriebene Ausführungsbeispiel mit Automatisierungszellen beschränkt, die jeweils eine speicherprogrammierbare Steuerung und mehrere IO-Geräten umfassen, sondern erstreckt sich auf beliebige Steuerungsgeräte eines industriellen Automatisierungssystem, die mit beliebigen Automatisierungs- bzw. Kommunikationsgeräten verbunden sind.

## Patentansprüche

1. Verfahren zur Adressvergabe an Kommunikationsgeräte, bei dem
- die Kommunikationsgeräte (202-204) mit einem Steuerungsgerät (201) eines industriellen Automatisierungssystems verbunden sind,
- das Steuerungsgerät (201) stellvertretend für die Kommunikationsgeräte (202-204) zur Adressvergabe jeweils eine Konfigurationsanforderung (213) entsprechend einem Konfigurationsprotokoll an einen Konfigurationsserver (103) übermittelt, wobei das Steuerungsgerät einen Konfigurationsclient (212) für das Konfigurationsprotokoll umfasst, während die Kommunikationsgeräte keine Konfigurationsclients für das Kommunikationsprotokoll umfassen,
- der Konfigurationsserver (103) auf die Konfigurationsanforderungen (213) jeweils eine Adresskonfiguration (131) für das jeweilige Kommunikationsgerät (202-204) bereitstellt und entsprechend dem Konfigurationsprotokoll an das Steuerungsgerät (201) übermittelt,
- das Steuerungsgerät (201) die Adresskonfigurationen jeweils in eine Geräteprojektierung umsetzt und die Geräteprojektierung mittels eines Steuerungsbefehls (214) an das jeweilige Kommunikationsgerät übermittelt,
- die Kommunikationsgeräte (202-204) ihre jeweilige Kommunikationsadresse jeweils entsprechend der vom Steuerungsgerät übermittelten Geräteprojektierung einrichten.

2. Verfahren nach Anspruch 1,
bei dem das Steuerungsgerät bei einem Ausfall des Konfigurationsservers einen reservierten Adressbereich mit lokal gültigen Kommunikationsnetzadressen nutzt und den Kommunikationsgeräten jeweils eine lokal gültige Kommunikationsnetzadresse aus dem reservierten Adressbereich zuweist, wobei die lokal gültigen Kommunikationsnetzadressen jeweils mit der jeweiligen Geräteprojektierung an die Kommunikationsgeräte übermittelt werden.

3. Verfahren nach einem der Ansprüche 1 oder 2,
bei dem das Steuerungsgerät die Konfigurationsanforderungen an den Konfigurationsserver jeweils bei einem Betriebsstart eines Kommunikationsgeräts übermittelt.

4. Verfahren nach einem der Ansprüche 1 bis 3,
bei dem das Steuerungsgerät eine vorgegebene Anzahl Konfigurationsanforderungen an den Konfigurationsserver für eine spätere Geräteprojektierung von Kommunikationsgeräten übermittelt.

5. Verfahren nach einem der Ansprüche 1 bis 4,
bei dem das Konfigurationsprotokoll DHCP ist und bei dem die Steuerungsbefehle zur Übermittlung der jeweiligen Geräteprojektierung an die Kommunikationsgeräte einem feldbusspezifischen Gerätekonfigurationsprotokoll entsprechen.

6. Verfahren nach Anspruch 5,
bei dem das Steuerungsgerät mit ihm verbundene Kommunikationsgeräte mittels einer Geräteerkennungsanfrage entsprechend dem feldbusspezifischen Gerätekonfigurationsprotokoll ermittelt.

7. Verfahren nach einem der Ansprüche 5 oder 6,
bei dem das Steuerungsgerät eine Erreichbarkeit von projektierten Kommunikationsgeräten mittels einer gezielten Geräteerkennungsanfrage entsprechend dem feldbusspezifischen Gerätekonfigurationsprotokoll überprüft.

8. Verfahren nach einem der Ansprüche 5 bis 7,
bei dem das feldbusspezifische Gerätekonfigurationsprotokoll PROFINET DCP entsprechend Standard IEC 61158 ist.

9. Verfahren nach einem der Ansprüche 1 bis 8,
bei dem das Steuerungsgerät anhand der vom Konfigurationsserver übermittelten Adresskonfigurationen und anhand projektierter Gerätenamen Gerätename-Kommunikationsadress-Zuordnungen speichert und einen Namensdienst für Adressauflösungsanfragen hinsichtlich der mit ihm verbundenen Kommunikationsgeräte bereitstellt.

10. Steuerungsgerät für ein industrielles Automatisierungssystem zur Durchführung eines Verfahrens nach einem der Ansprüche 1 bis 9, wobei das Steuerungsgerät dafür ausgestaltet und eingerichtet ist,
- mit zugeordneten Kommunikationsgeräten verbunden zu werden,
- stellvertretend für die Kommunikationsgeräte zur Adressvergabe jeweils eine Konfigurationsanforderung entsprechend einem Konfigurationsprotokoll an einen Konfigurationsserver zu übermitteln, wobei das Steuerungsgerät einen Konfigurationsclient für das Konfigurationsprotokoll umfasst, während die Kommunikationsgeräte keine Konfigurationsclients für das Kommunikationsprotokoll umfassen,
- vom Konfigurationsserver auf die Konfigurationsanforderungen entsprechend dem Konfigurationsprotokoll übermittelte Adresskonfiguration jeweils in eine Geräteprojektierung umzusetzen und die Geräteprojektierung mittels eines Steuerungsbefehls an das jeweilige Kommunikationsgerät zu dessen Einrichtung zu übermitteln.
